# EUROPEAN PATENT SPECIFICATION

(11) **EP 3 766 392 B1**
(45) Date of publication and mention of the grant of the patent: **02.11.2022**
(21) Application number: 19187460.1
(22) Date of filing: 19.07.2019
(51) Int. Cl.: A47J 31/40, A47J 31/44, A47J 31/60, G01G 19/56, G01G 17/06

(54) **FULL AUTOMATIC COFFEE MACHINE**
VOLLAUTOMATISCHE KAFFEEMASCHINE
MACHINE À CAFÉ ENTIÈREMENT AUTOMATIQUE

(43) Date of publication of application: 20.01.2021
(73) Proprietor: BSH Hausgeräte GmbH, 81739 München (DE)
(72) Inventor: Drobez, Iztok, 3313 Polzela (SI); Kirschner, Andreas, 83301 Traunreut (DE); Lemez, Samo, 3327 Smartno ob Paki (SI); Semprimoznik, Ales, 3330 Mozirje (SI)

(56) References cited:
- DE-A1-102012 200 952
- DE-A1-102015 102 590
- DE-U1-202018 000 246

## Description

The invention relates to a beverage preparation machines having a milk fill level monitoring device for a milk container, such as coffee machines with a milk container provided for preparing Cappuccino, furthermore the invention relates to a milk fill level monitoring device for a milk container.

In coffee machines, producing the milk froth for the Cappuccino and the heating of milk is carried out in many cases in a frothing device using the Venturi principle. A negative pressure is generated with a suitable steam jet, which sucks the milk from the supply container (milk container) via a hose system and guides it into the nozzle of the frothing device. In the nozzle, the milk is brought together with the steam and the milk-steam-air mixture leaves the frothing device and runs into the cup through a steady outlet jet. If air is added to the cold milk during the extraction, warm milk with a milk froth located thereover is produced in the cup. Without air being added, the milk can only be heated. If too little or no milk is present in the milk container and the sequence of the milk product deliveries, in particular the Cappuccino delivery in the coffee machine controller is fixedly programmed, the consumer only receives a coffee without milk or with too little milk and milk froth. For the user this is irritating since he must repeat the entire process once again to obtain a perfect Cappuccino (milk product) and throw away the coffee that has possibly already been withdrawn. This means a waste of resources and also has financial implications, particularly if the consumer must pay a fixed amount for the Cappuccino withdrawal, whether this be in the office area or in the restaurant area.

Document US2010047406 A1 discloses the invention related to a method for dispensing milk portions in drink preparation machines having a milk fill level monitoring unit for a milk container. According to the method, one delivery of a milk portion from the milk container, said delivery being controlled by a device control electronic system, is only carried out completely and with a sufficient quantity of milk when during the delivery of the milk portion, the milk fill level monitoring unit signals a drop in the fill level of the milk below a threshold value.

Document DE102012200952 A1 discloses a drinks preparing device having a milk foamer for processing a perishable raw material i.e. milk. A container retainer i.e. milk container retainer, for retaining a container i.e. milk container, with the perishable raw material. A user information interface e.g. optical display, supplies a user with operation information. The container retainer is provided with an electronic container detection device, e.g. at least one capacitive sensor, at least one light barrier and/or at least one weight detection device which detects whether the container retainer includes the container. The device informs the user when the container is present via the user information interface. An independent claim is also included for a method for detecting a container with a perishable raw material in a drinks preparing device.

Document DE202018000246 U1 discloses a coffee machine, in particular fully automatic coffee machine, with a housing in which a brewing chamber for preparing a coffee product is arranged, a control device for controlling the brewing chamber on or in the housing is provided; and with a scale designed separately from the housing, by means of which the weight of a container, particularly one that can be filled or filled with milk, can be determined, the scale determining the determined value when the coffee machine is in operation. The weight of the container is transmitted to the control / regulating device via an electronic communication interface which is provided on the scale and on the housing.

Document DE102015102590 A1 discloses an automatic drinks machine comprising a storage container, a control device and a fill level measuring device for determining the fill level of the storage container, which is further developed according to the invention in that the fill level measuring device has at least one with the control device corresponding force sensor for detecting the weight of the storage container. The invention further relates to a method for measuring the weight of a storage container in such a beverage dispenser, which is characterized in that the level measuring device is calibrated before the first measurement of the weight of the storage container, at least an expansion member relaxes when the storage container is removed from the vending machine, thereby relieving the load on the force sensor, so that a zero position of the force sensor is defined, which is to be stored in the control device Output measured value for subsequent measurements with an existing storage container.

Document EP2568858 A1 discloses the milk chilling device has a milk container body with a milk container for receiving milk volume, a cooling unit for cooling the milk volume and a milk-lance, which has an end that is merged in the milk volume and another end that stand in fluid connection with a milk outlet on the outside of the milk chilling device. A filling level sensor is formed to generate a sensor signal in response to a filling level of the milk container. A filling level measuring electronics is connected to the filling level sensor. Independent claims are also included for the following: a beverage preparation machine, which has a milk dispenser; and a beverage preparation machine and milk chilling device assembly, which has an add-on device; and a method for obtaining a milk volume from a milk chilling device.

Document EP0472272 A2 discloses an automated espresso coffee machine and method are disclosed which include fully automatic coffee grinding and brewing apparatus and steam generator means for driving a venturi mixing device which draws ambient air and milk from a refrigerated source for making milk inclusive espresso beverages, all milk contacting surfaces being either refrigerated or steam cleaned with each beverage made and served. Micro-processor means controls all operations including brewing, steam generating, water heating, refrigerating, operations parameters, measuring and monitoring, many "housekeeping" functions and others. Furthermore the automated coffee machine is provided with a milk level sensing device, wherein a milk level sensor is based on a function of weighing the amount of the milk remaining in the vessel.

Document EP1472963 A1 discloses device for delivering milk and/or milk foam from a container containing milk has a line made from a flexible tubing which is placed in a squeezed tube pump equipped with adjusting devices to adjust the tubing from a closed state into an open state releasing the opening of the flexible tubing. An independent claim is also included for a coffee machine, especially an espresso machine, containing the above device. Said device is equipped with a milk level sensor is based on a function of weighing the amount of the milk remaining in the vessel.

The objective of the present invention is to provide a full automatic coffee machine, wherein a milk fill level monitoring device and the interior of the coffee machine is prevented against a spilled liquid as water, milk or other product of the brewing system which could cause improper work of the coffee machine.

In accordance with the present invention, there is provided a full automatic coffee machine, comprising a housing, a water tank, a brewing unit, a heating unit and a drip tray. Furtherly the housing comprises a milk chamber with a bottom, that is provided for receiving a container containing milk, and also comprises a means for determining the weight of the container which is disposed in the region of the bottom of the milk chamber on which the container is placeable. The means for determining the weight of the container comprises a weight sensor and a cover that is attachable and detachable mounted with the weight sensor. The bottom of the milk container is provided with a drainage system that surrounds the weight sensor. The cover is sized to cover the weight sensor and at least portion of the drainage system.

Additionally the present invention comprises a method of cleaning means for determining the weight of the container which consist of following steps: removing the cover from the weight sensor, removing the dirt form the drainage system, flushing the drainage system, reinserting the cover on the weight sensor.

The weighting device which comprises the weight sensor with the cover, that covers the weighting sensor and at least partially covers the drainage system that surrounds the weight sensor causes that spilled water from the brewing system for instance or milk from container is transported to the drainage system, and the cover additionally acts as a protective umbrella of the weight sensor on which said spilled liquid flows down to the drainage system. Additionally, detachably fixed the cover provides possibility to easy clean the drainage system. Therefore the weighting device and the interior of the coffee machine is whole protected against aforementioned risks, and the objective of the present invention is achieved.

In the preferred embodiment the cover is sized to cover both, the weight sensor and the drainage system, so the lateral sides of the cover reaches interior walls of the housing and it provides in the region of bottom of the milk chamber convenient for a user wide an upper surface for placing the container.

Advantageously, the weight sensor on its lateral side is provided with a fixing means for fixing the cover on the weight sensor. Therefore the cover with the upper surface provides stable support for placing the container containing milk.

According to an advantageous embodiment of the invention the weight sensor is fixedly mounted to the bottom for weighing the container. Therefore stable support for the cover is provided. The weight sensor is provided on it bottom side with a slot for receiving a hook that protrudes from the bottom of the milk chamber.

Advantageously the coffee machine is provided with in the cover which is in the shape of a flat rectangular empty prism that is opened from below, and fixed on the weight sensor by the fixing means from it opened side. Therefore production of the cover can be realized by the injection molding technology, that favorably affecting the reduction of production costs.

In another preferred embodiment the cover is fixedly supported by the weight sensor, and side walls of the cover are in sliding contact with the side walls of the milk chamber and the upper surface of the cover forms the place for receiving the container. Because of the sliding contact between the side walls of the cover with the side walls of the milk chamber a large part of the waste remains on cover where can be easy removed.

Advantageously the coffee machine is provided with the drainage system which is formed by two slopping gutters arranged in the bottom and from the side of the weight sensor is limited by a rib and from the other side limited by the side walls of the milk chamber. Advantageously the rib is arranged along the weight sensor, and in that the said rib adheres sliding with the said weight sensor. Therefore the drainage system effectively removes wastes from surroundings of the weight sensor and is easy to clean because of its shape.

In the another preferred embodiment at least one end of the drainage system is fluidly connected with the drip tray. Therefore water or milk or other waste can flow directly to drip tray that part of the coffee machine commonly emptying by an user.

Advantageously the cover is equipped with a magnet and the weight sensor has a magnet attractive component for holding the cover on the weight sensor. In the another preferred embodiment the weight sensor is equipped with a magnet and the cover has a magnet attractive component for holding the cover on the weight sensor or the cover at least partially is made of the magnet attractive material.

This solution is easy to produce and space effective and not need any additional means for fixing the cover to the weight sensor, where dirt would accumulate.

Additionally that is provided the method of cleaning means for determining the weight of the container which consist of following steps, removing the cover from the weight sensor, removing the dirt form the drainage system, flushing the drainage system, reinserting the cover on the weight sensor.

The weighting device of the coffee machine, provided with the weight sensor and the cover, that covers the weighting sensor and at least partially covers the drainage system that surrounds the weight sensor causes that spilled liquid, milk and/or water is transported to the drainage system then to the drip tray. In this, the cover also acts as a protective umbrella for the weight sensor protecting it against the spilled liquids, so said liquids flows down to the drainage system. Additionally, detachably mounted the cover provides possibility to easy clean the drainage system. Therefore the weighting device and the interior of the coffee machine is whole protected against aforementioned risks, and the objective of the present invention is achieved.

Further benefits and advantages of the present invention will become apparent after a careful reading of the detailed description with appropriate reference to the accompanying drawings.

In the drawings:
Fig. 1 is a perspective front view of the coffee machine.
Fig. 2 is a perspective view of the bottom region of the coffee machine as shown in Fig. 1.
Fig. 3 is a perspective view of the bottom region and a weight sensor of the coffee machine as shown in Fig. 1.
Fig. 4 is a perspective view, the weight sensor, and ribs arranged on the bottom region of the coffee machine as shown in Fig. 1.
Fig. 5 is a cross-section through the bottom region, the weight sensor and ribs of the coffee machine as shown in Fig. 2.
Fig. 6 is a perspective view of the bottom region, the weight sensor, a cover of the coffee machine as shown in Fig. 1.

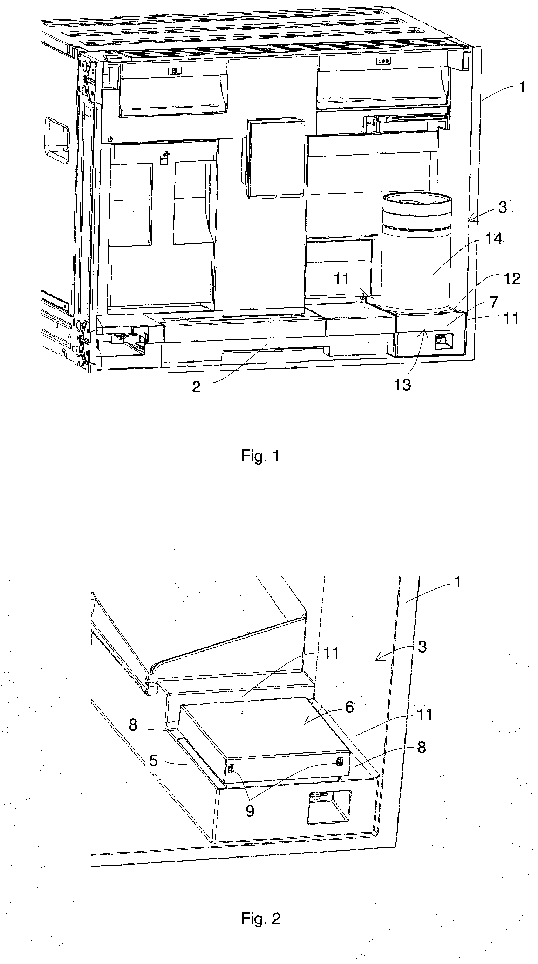

Reference is made to Fig. 1 which is a perspective front view of the coffee machine according to the present invention. The coffee machine has a housing 1 with a front door or cover (not shown on this figure) which covers inner space of the coffee machine. Furtherly the coffee machine comprises a water tank for storing water, a brewing unit (not shown on this figure), a heating unit (not shown on this figure), a drip tray 2 and a control unit (not shown on this figure) for controlling the function of the coffee machine. In the housing 1, it is arranged a milk chamber 3 with a bottom 5 for receiving a container 14 containing milk. In the region of the bottom 5 of the milk chamber 3 is placed a means 13 for determining the weight of the container 14. The said means 13 for determining the weight of the container 14 comprises a weight sensor 6 (not shown on this figure), and a cover 7 that is attachable and detachable mounted with the weight sensor 6. Additionally the bottom 5 is provided with a drainage system 8 (not shown on this figure) that surrounds the weight sensor 6, and the cover 7 is sized to cover the weight sensor 6 and the drainage system 8 (not shown on this figure). The cover 7 has an upper portion 12 which form the flat surface for placing the container 14. The means 13 for determining the weight of milk in the container 14 provides to the control unit (not shown on this figure) a signal related to the amount of the milk in the container 14, therefore the control unit informing the user to fill in the container 14 with milk. The weight sensor 6 is fixedly connected with the bottom 5 by a hook 15 (not shown on this figure) which protrudes from the bottom 5 and extending to a slot 16 (not shown on this figure) configured to receive it, another point of fixation of the weight sensor 6 is created by screwing the socket to a rib 4 (not shown on this figure) using through an opening 17 (not shown on this figure). The weight sensor 6 is equipped the cover 7, they are detachable connected and lateral wall of the cover 7 reaches the side walls of the milk chamber.

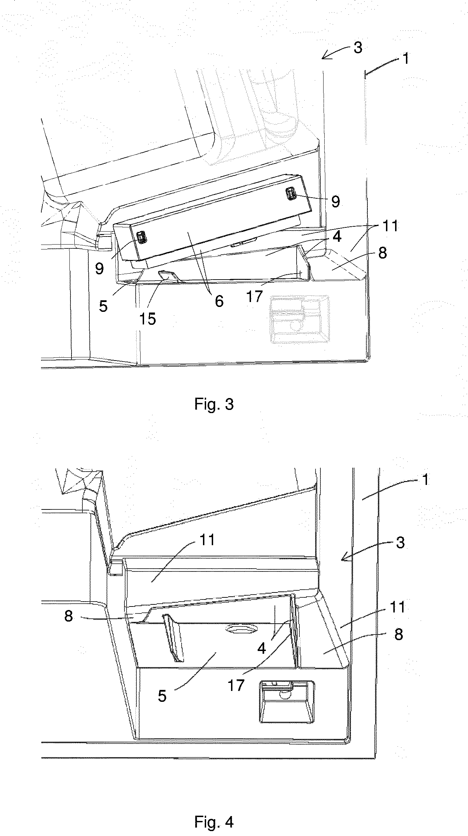

Reference is made to Fig. 2, Fig.3, and Fig.4 which are perspective front view of bottom region 5 of the coffee machine according to the present invention. The coffee machine having the housing 1, which is provided with the milk chamber 3 with a bottom 5 for receiving a container 14 containing milk (not shown on this figure). In the region of the bottom 5 of the milk chamber 3 is placed means 13 for determining the weight of the container 14. The said means 13 for determining the weight of the container 14 comprises a weight sensor 6, and a cover 7 (not shown on these figures) that is attachable and detachable mounted with the weight sensor 6 by a fixing means 9 placed on the lateral surface of the weight sensor 6. Additionally the bottom 5 is provided with a drainage system 8, that surrounds the weight sensor 6 from two sides, and the cover 7 which is sized to cover the weight sensor 6 and the drainage system 8, wherein edges of the upper surface 12 of the cover 7 reaches the side walls 11 of the milk chamber 3. The drainage system 8 is formed by two slopping gutters arranged at right angle to each other on the bottom 5 adhering to the two sides of weight sensor 6. The drainage system 8, from the sides of the weight sensor 6 is limited by a rib 4 and from the opposite side is limited by the side walls 11 of the milk chamber. The cover 7 has an upper portion 12 which forms the flat surface for placing the container 14 and limited by the side walls 11. The means 13 for determining the weight of milk in the container 14 provides to the control unit (not shown on these figures) a signal related to the amount of the milk in the container 14, therefore if it is necessary, the control unit informs the user to fill in the container 14 with milk or/and stops using means for preparing beverage with milk. The weight sensor 6 is fixedly connected with the bottom 5 by a hook 15 which protrudes from the bottom 5 and extending to a slot 16 (not shown on this figure) in the bottom portion of the weight sensor 6. Another point of the fixation of the weight sensor 6 is created by screwing the socket 18 (not shown on this figure) to a rib 4, through an opening 17.

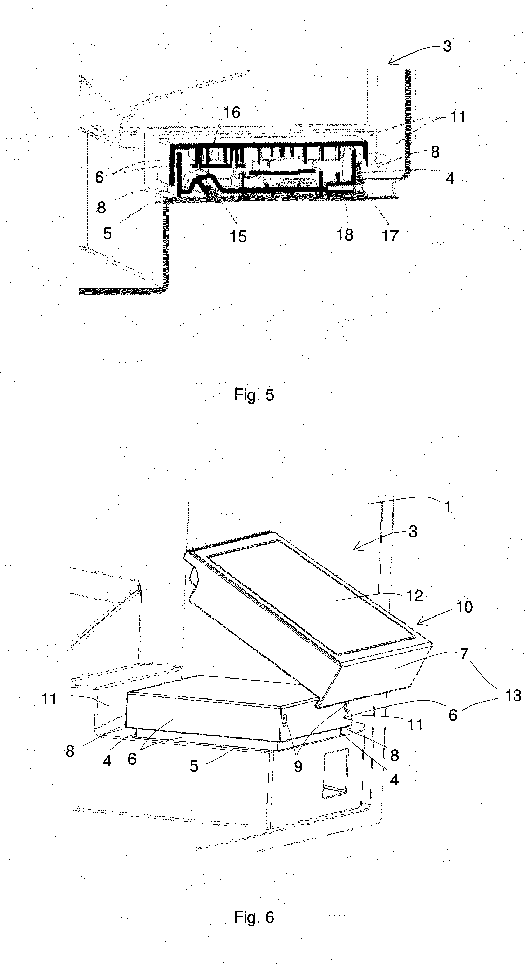

Reference is made to Fig. 5 which is a cross-section through the bottom 5 region, the weight sensor and ribs of the coffee machine according to the present invention. The coffee machine having the housing 1, which is provided with the milk chamber 3 with a bottom 5 for receiving a container 14 (not shown on this figure) containing milk. In the region of the bottom 5 of the milk chamber 3 is placed means 13 for determining the weight of the container 14. The said means 13 for determining the weight of the container 14 comprises a weight sensor 6, and a cover 7 (not shown on this figure) that is attachable and detachable mounted with the weight sensor 6. Additionally the bottom 5 is provided with a drainage system 8, that surrounds the weight sensor 6 from two sides, and the cover 7 which is sized to cover the weight sensor 6 and the drainage system 8, wherein edges of the upper surface 12 of the cover 7 reaches the side walls 11 of the milk chamber 3. The drainage system 8 is formed by two slopping gutters arranged at right angle to each other on the bottom 5 adhering to the two sides of weight sensor 6. The drainage system 8, from the sides of the weight sensor 6 is limited by a rib 4 and from the opposite side is limited by the side walls 11 of the milk chamber. The cover 7 has an upper portion 12 which forms the flat surface for placing the container 14 and limited by the side walls 11. The means 13 for determining the weight of milk in the container 14 provides to the control unit (not shown on these figures) a signal related to the amount of the milk in the container 14, therefore if it is necessary, the control unit informs the user to fill in the container 14 with milk or/and stops using means for preparing beverage with milk. The weight sensor 6 is fixedly connected with the bottom 5 by a hook 15 which protrudes from the bottom 5 and extending to a slot 16 in the bottom portion of the weight sensor 6, another point of the fixation of the weight sensor 6 is created by a screw (not shown on this figure), screwed in an opening 17 of the rib 4 to the socket 18 formed in the weight sensor 6.

Reference is made to Fig. 6 which is a perspective view of the bottom 5 region, the weight sensor 6, a cover 7 of the means 13 for determining the weight of the milk of the coffee machine of the coffee machine according to the present invention. The coffee machine having the housing 1, which is provided with the milk chamber 3 with a bottom 5 region for receiving a container 14 (not shown on this figure) containing milk. In the region of the bottom 5 of the milk chamber 3 is placed means 13 for determining the weight of the container 14. The said means 13 comprises a weight sensor 6, and a cover 7 that is attachable and detachable mounted with the weight sensor 6 by using a fixing means 9 placed on the lateral side of the weight sensor 6. The cover 7 is in the shape of a flat rectangular empty prism that is opened from below, and fixed on the weight sensor 6 by the fixing means 9 and recesses (not shown on this figure) from it opened side. The said fixing means 9 is formed by two projections projecting about 2 mm outwardly from the lateral side of the weight sensor 6 and the cover 7 is equipped with two recesses for receiving the said fixing means 9. Additionally the bottom 5 is provided with a drainage system 8, that surrounds the weight sensor 6 from two sides, and the cover 7 which is sized to cover the weight sensor 6 and the drainage system 8, wherein edges of the upper surface 12 of the cover 7 reaches the side walls 11 of the milk chamber 3. The drainage system 8 is formed by two slopping gutters arranged at right angle to each other on the bottom 5 adhering to the two sides of weight sensor 6. The drainage system 8, from the sides of the weight sensor 6 is limited by a rib 4 and from the opposite side is limited by the side walls 11 of the milk chamber. The cover 7 has an upper portion 12 which forms the flat surface for placing the container 14 and limited by the side walls 11. The means 13 for determining the weight of milk in the container 14 provides to the control unit (not shown on these figures) a signal related to the amount of the milk in the container 14, therefore if it is necessary, the control unit informs the user to fill in the container 14 with milk or/and stops using means for preparing beverage with milk. The weight sensor 6 is fixedly connected with the bottom 5 by a hook 15 (not shown on this figure) which protrudes from the bottom 5 and penetrating a slot 16 which is form in the bottom portion of the weight sensor 6, that creates first point of fixation, another point of the fixation of the weight sensor 6 is created by a screw (not shown on this figure) which is screwed in an opening 17 (not shown on this figure) of the rib 4 to the socket 18 (not shown on this figure) formed in the weight sensor 6.

### List of reference signs.

1 housing
2 drip tray
3 milk chamber
4 rib
5 bottom
6 weight sensor
7 cover
8 drainage system
9 fixing mean
10 side wall of the cover
11 side wall of the housing
12 upper surface
13 means for determining the weight
14 container
15 hook
16 slot
17 opening
18 socket

## Claims

1. Full automatic coffee machine, comprising a housing (1), a water tank, a brewing unit, a heating unit, a drip tray (2), a milk chamber (3) with a bottom (5), disposed in the housing (1), for receiving a container (14) containing milk, and a means (13) for determining the weight of the container (14) which is disposed in the region of the bottom (5) of the milk chamber (3) on which the container (14) is placeable, **characterized in that** the means (13) for determining the weight of the container (14) comprises a weight sensor (6), and a cover (7) that is attachable and detachable mounted with the weight sensor (6), and **in that** the bottom (5) is provided with a drainage system (8) that surrounds the weight sensor (6), and **in that** the cover (7) is sized to cover the weight sensor (6) and at least a portion of the drainage system (8).

2. The coffee machine according to claim 1, **characterized in that** the cover (7) is sized to cover both, the weight sensor (6) and the drainage system (8).

3. The coffee machine according to claim 1 or 2, **characterized in that** the weight sensor (6) on its lateral side is provided with a fixing means (9) for fixing the cover (7) on the weight sensor (6).

4. The coffee machine according to any of claims from 1 to 3, **characterized in that** the weight sensor (6) is fixedly mounted to the bottom (5) for weighing the container (14).

5. The coffee machine according to any of claims from 1 to 4, **characterized in that** the cover (7) is in the shape of a flat rectangular empty prism that is opened from below, and fixed on the weight sensor (6) by the fixing means (9) from it opened side.

6. The coffee machine according to any of claims from 1 to 5, **characterized in that** the cover (7) is fixedly supported by the weight sensor (6), and **in that** side walls (10) of the cover (7) can slide on the side walls (11) of the milk chamber (3) and the upper surface (12) of the cover (7) forms the place for receiving the container (14).

7. The coffee machine according to any of the preceding claims, **characterized in that** the drainage system (8) is formed by two slopping gutters arranged in the bottom (5) and from the side of the weight sensor (6) limited by a rib (4) and from the other side limited by the side walls (11) of the milk chamber (3).

8. The coffee machine according to claim 7, **characterized in that** the rib (4) is arranged along the weight sensor (6), and **in that** the said rib (4) adheres sliding with the said weight sensor (6).

9. The coffee machine according to any of the preceding claims, **characterized in that** the at least one end of the drainage system (8) is fluidly connected with the drip tray (2).

10. The coffee machine according to claim 1, **characterized in that** the cover (7) is equipped with a magnet and **in that** the weight sensor (6) has a magnet attractive component for holding the cover (7) on the weight sensor (6).

11. The coffee machine according to claim 1, **characterized in that** the weight sensor (6) is equipped with a magnet and **in that** the cover (7) has a magnet attractive component for holding the cover (7) on the weight sensor (6).

12. The coffee machine according to claim 11, **characterized in that** the cover (7) at least partially is made of the magnet attractive material.

13. The method of cleaning means (13) for determining the weight of the container (14) of a full automatic coffee machine according to any of the claims 1-12, which consist of following steps:
- removing the cover (7) from the weight sensor (6).
- removing the dirt form the drainage system (8),
- flushing the drainage system (8),
- reinserting the cover (7) on the weight sensor (6).

## Patentansprüche

1. Kaffeevollautomat mit einem Gehäuse (1), einem Wassertank, einer Brüheinheit, einer Heizeinheit, einer Abtropfschale (2), einer in dem Gehäuse (1) angeordneten Milchkammer (3) mit einem Boden (5) zum Aufnehmen eines Milch enthaltenden Behälters (14) und einem Mittel (13) zum Bestimmen des Gewichts des Behälters (14), das im Bereich des Bodens (5) der Milchkammer (3) angeordnet ist, auf dem sich der Behälter (14) platzieren lässt, **dadurch gekennzeichnet, dass** das Mittel (13) zum Bestimmen des Gewichts des Behälters (14) einen Gewichtssensor (6) und eine Abdeckung (7) umfasst, die sich an dem Gewichtssensor (6) anbringen und davon abnehmen lässt, und dass der Boden (5) mit einem Ablaufsystem (8) versehen ist, das den Gewichtssensor (6) umgibt, und dass die Abdeckung (7) so bemessen ist, dass sie den Gewichtssensor (6) und zumindest einen Teil des Ablaufsystems (8) abdeckt.

2. Kaffeemaschine nach Anspruch 1, **dadurch gekennzeichnet, dass** die Abdeckung (7) so bemessen ist, dass sie sowohl den Gewichtssensor (6) als auch das Ablaufsystem (8) abdeckt.

3. Kaffeemaschine nach Anspruch 1 oder 2, **dadurch gekennzeichnet, dass** der Gewichtssensor (6) an seiner Seite mit einem Fixiermittel (9) zum Fixieren der Abdeckung (7) an dem Gewichtssensor (6) versehen ist.

4. Kaffeemaschine nach einem der Ansprüche 1 bis 3, **dadurch gekennzeichnet, dass** der Gewichtssensor (6) zum Wiegen des Behälters (14) fest an dem Boden (5) angebracht ist.

5. Kaffeemaschine nach einem der Ansprüche 1 bis 4, **dadurch gekennzeichnet, dass** die Abdeckung (7) die Form eines flachen, rechteckigen, leeren Prismas aufweist, das von unten her offen ist, und über das Fixiermittel (9) von seiner offenen Seite her an dem Gewichtssensor (6) fixiert ist.

6. Kaffeemaschine nach einem der Ansprüche 1 bis 5, **dadurch gekennzeichnet, dass** die Abdeckung (7) starr von dem Gewichtssensor (6) getragen wird und Seitenwände (10) der Abdeckung (7) an den Seitenwänden (11) der Milchkammer (3) entlanggleiten können und die obere Oberfläche (12) der Abdeckung (7) die Stelle zum Aufnehmen des Behälters (14) bildet.

7. Kaffeemaschine nach einem der vorhergehenden Ansprüche, **dadurch gekennzeichnet, dass** das Ablaufsystem (8) von zwei Überlaufrinnen gebildet wird, die im Boden (5) angeordnet und von der Seite des Gewichtssensors (6) her durch eine Rippe (4) und von der anderen Seite her durch die Seitenwände (11) der Milchkammer (3) begrenzt sind.

8. Kaffeemaschine nach Anspruch 7, **dadurch gekennzeichnet, dass** die Rippe (4) an dem Gewichtssensor (6) entlang angeordnet ist und gleitend an dem Gewichtssensor (6) anliegt.

9. Kaffeemaschine nach einem der vorhergehenden Ansprüche, **dadurch gekennzeichnet, dass** das mindestens eine Ende des Ablaufsystems (8) mit der Abtropfschale (2) fluidverbunden ist.

10. Kaffeemaschine nach Anspruch 1, **dadurch gekennzeichnet, dass** die Abdeckung (7) mit einem Magnet versehen ist und der Gewichtssensor (6) eine magnetische Komponente zum Halten der Abdeckung (7) an dem Gewichtssensor (6) aufweist.

11. Kaffeemaschine nach Anspruch 1, **dadurch gekennzeichnet, dass** der Gewichtssensor (6) mit einem Magnet versehen ist und die Abdeckung (7) eine magnetische Komponente zum Halten der Abdeckung (7) an dem Gewichtssensor (6) aufweist.

12. Kaffeemaschine nach Anspruch 11, **dadurch gekennzeichnet, dass** die Abdeckung (7) zumindest teilweise aus dem magnetischen Material hergestellt ist.

13. Verfahren zum Reinigen des Mittels (13) zum Bestimmen des Gewichts des Behälters (14) eines Kaffeevollautomaten nach einem der Ansprüche 1 bis 12, das aus folgenden Schritten besteht:
- Abnehmen der Abdeckung (7) vom Gewichtssensor (6),
- Entfernen des Schmutzes aus dem Ablaufsystem (8),
- Spülen des Ablaufsystems (8),
- Wiedereinsetzen der Abdeckung (7) am Gewichtssensor (6).

## Revendications

1. Machine à café entièrement automatique comprenant un boîtier (1), un réservoir d'eau, une unité d'ébouillantage, une unité chauffante, un bac d'égouttage (2), un compartiment à lait (3) avec un fond (5), disposé dans le boîtier (1), pour recevoir un récipient (14) contenant du lait, et un moyen (13) pour déterminer le poids du récipient (14) qui est disposé dans la région du fond (5) du compartiment à lait (3) sur lequel le récipient (14) peut être posé,
**caractérisée en ce que** le moyen (13) pour déterminer le poids du récipient (14) comprend un capteur de poids (6), et un capot (7) qui est monté de façon à pouvoir être attaché au et détaché du capteur de poids (6), et **en ce que** le fond (5) est pourvu d'un système d'écoulement (8) qui entoure le capteur de poids (6), et **en ce que** le capot (7) est dimensionné pour recouvrir le capteur de poids (6) et au moins une partie du système d'écoulement (8).

2. Machine à café selon la revendication 1, **caractérisée en ce que** le capot (7) est dimensionné pour recouvrir à la fois le capteur de poids (6) et le système d'écoulement (8).

3. Machine à café selon la revendication 1 ou 2, **caractérisée en ce que** le capteur de poids (6) est pourvu d'un moyen de fixation (9) sur son côté latéral pour fixer le capot (7) sur le capteur de poids (6).

4. Machine à café selon l'une quelconque des revendications 1 à 3, **caractérisée en ce que** le capteur de poids (6) est monté de façon fixe sur le fond (5) pour peser le récipient (14).

5. Machine à café selon l'une quelconque des revendications 1 à 4, **caractérisée en ce que** le capot (7) est sous la forme d'un prisme vide rectangulaire plat qui est ouvert par en dessous, et fixé sur le capteur de poids (6) par le moyen de fixation (9) à partir de son côté ouvert.

6. Machine à café selon l'une quelconque des revendications 1 à 5, **caractérisée en ce que** le capot (7) est supporté de façon fixe par le capteur de poids (6), et **en ce que** les parois latérales (10) du capot (7) peuvent glisser sur les parois latérales (11) du compartiment à lait (3) et la surface supérieure (12) du capot (7) forme l'emplacement pour recevoir le récipient (14).

7. Machine à café selon l'une quelconque des revendications précédentes, **caractérisée en ce que** le système d'écoulement (9) est formé par deux gouttières en pente disposées dans le fond (5), délimitées du côté du capteur de poids (6) par une nervure (4) et délimitées de l'autre côté par les parois latérales (11) du compartiment à lait (3).

8. Machine à café selon la revendication 7, **caractérisée en ce que** la nervure (4) est disposée le long du capteur de poids (6), et **en ce que** ladite nervure (4) adhère par glissement au dit capteur de poids (6).

9. Machine à café selon l'une quelconque des revendications précédentes, **caractérisée en ce que** l'au moins une extrémité du système d'écoulement (8) est raccordée fluidiquement au bac d'égouttage (2).

10. Machine à café selon la revendication 1, **caractérisée en ce que** le capot (7) est équipé d'un aimant et **en ce que** le capteur de poids (6) possède un composant attiré par un aimant pour maintenir le capot (7) sur le capteur de poids (6).

11. Machine à café selon la revendication 1, **caractérisée en ce que** le capteur de poids (6) est équipé d'un aimant et **en ce que** le capot (7) possède un composant attiré par un aimant pour maintenir le capot (7) sur le capteur de poids (6).

12. Machine à café selon la revendication 11, **caractérisée en ce que** le capot (7) est fabriqué au moins en partie du matériau attiré par un aimant.

13. Procédé pour nettoyer un moyen (13) de détermination du poids du récipient (14) d'une machine à café entièrement automatique selon l'une quelconque des revendications 1 à 12, qui comprend les étapes suivantes :
- enlèvement du capot (7) du capteur de poids (6),
- enlèvement des salissures du système d'écoulement (8),
- rinçage du système d'écoulement (8), et
- réinsertion du capot (7) sur le capteur de poids (6).
